Europäisches Patentamt

European Patent Office

Office européen des brevets

(11) Veröffentlichungsnummer: **0 395 577**
**A1**

## (12) EUROPÄISCHE PATENTANMELDUNG

(21) Anmeldenummer: 90810301.3

(22) Anmeldetag: 18.04.90

(51) Int. Cl.5: **H02G 1/08**

(30) Priorität: 28.04.89 CH 1644/89

(43) Veröffentlichungstag der Anmeldung:
**31.10.90 Patentblatt 90/44**

(84) Benannte Vertragsstaaten:
**DE FR GB IT**

(71) Anmelder: **"BRUGG"-KABEL AG**
**Klosterzelgstrasse 28**
**CH-5200 Brugg(CH)**

(72) Erfinder: **Schaudt, Hansjakob**
**am Hölzle 8**
**D-7867 Wehr(DE)**

(74) Vertreter: **Breiter, Heinz**
**Patentanwalt H. Breiter AG**
**Schaffhauserstrasse 27 Postfach 1163**
**CH-8401 Winterthur(CH)**

(54) **Ziehen von längsgeformten Zugobjekten.**

(57) Eine schlauch- oder kappenartige Vorrichtung zum Ziehen von längsgeformten Zugobjekten (16) in deren Längsrichtung wird hergestellt, indem ein Zugübermittler (22) aus einem aus einem kraftschlüssig angreifenden Ziehstrumpf (14) mit einem aussenliegenden, den Ziehstrumpf (14) in Längsrichtung (L) wenigstens teilweise bedeckenden, thermoplastischen Schrumpfschlauch (12) in einem Arbeitsgang aufgebracht wird. Die im Querschnitt runden oder abgerundeten Zugobjekte (16) sind insbesondere Kabel oder Rohre.

Die Ziehvorrichtung ragt nur wenig über das stirnseitige Ende (26) eines Zugobjekts (16) und/oder eines Anhänge-Elements (10) hinaus.

Der Erfindungsgegenstand wird insbesondere verwendet
- zum stirnseitigen Aufbringen auf ein Zugobjekt (16) auf einer Seite und zur Bildung einer Zugöse (18) aus Strumpffasern auf der andern Seite, oder
- zum Verbinden eines Anhänge-Elements (10) mit einem Zugobjekt (16), oder
- zum Verbinden von zwei Zugobjekten (16) oder zwei Anhänge-Elementen (10) miteinander.

Fig. 7

EP 0 395 577 A1

## Ziehen von längsgeformten Zugobjekten

Die Erfindung bezieht sich auf ein Verfahren zur Herstellung einer schlauch- bzw. kappenartigen Vorrichtung zum Ziehen von längsgeformten, im Querschnitt runden oder abgerundeten Zugobjekten, insbesondere von Kabeln oder Rohren, in deren Längsrichtung, mittels einer Ziehvorrichtung und die nach dem Verfahren hergestellte Vorrichtung. Weiter betrifft die Erfindung die Verwendung der Vorrichtung.

Das Ziehen von Kabeln, Rohren oder ähnlichen längsgeformten Gegenständen mit einer auf einem Ziehstrumpf basierenden Zugvorrichtung ist seit langem bekannt, beispielsweise zum Einziehen in und Herausziehen aus Führungsrohren bzw. -kanälen oder zum Aufhaspeln.

Ziehstrümpfe in Form eines schlauchförmigen Geflechtes wurden vorerst aus einem losen Geflecht aus Stahldrahtlitzen hergestellt. Das eine Ende des in einer bestimmten Länge hergestellten Ziehschlauches ist zu einer festen Zugöse verarbeitet, an welcher das Zugseil angreift.

Das in das offene Ende des Ziehstrumpfs eingelegte Zugobjekt wird mit einer leichten Bandage befestigt. Bei einwirkender Zugkraft wird das Geflecht des Ziehstrumpfes unter Bildung eines Kraftschlusses radial zusammengezogen. Metallische Ziehstrümpfe sind insbesondere für schwere, robuste d.h. verhältnismässig unverletzliche Zugobjekte geeignet.

In der DE-A1 3040760 wird ein Ziehstrumpf mit einem Geflecht aus Kunststoffasern beschrieben. Die Zugöse wird mit einem Ende des Abschnittes gebildet, wobei das zurückgeschlungene Ende mittels einer Fixierung festgelegt ist. Ein solcher Ziehstrumpf kann auch für ein Kabel geringen Durchmessers, das zudem verletzungsempfindlicher ist, verwendet werden.

Die DE-A1 3414611 beschreibt eine zugfeste Verkappung für ein optisches Kabel mit einem aussenliegenden Ziehstrumpf. Ein zusätzlich angeordneter Zuganker erlaubt, die Zugkräfte grösserenteils auf ein zentrales Tragelement zu übertragen. Damit kann eine Beschädigung der optischen Leiter vermieden werden. Zur Montage des Zugankers wird die Umhüllung axial in mehrere streifenartige Lappen aufgeschnitten und so weit zurückgebogen, dass die optischen Leiter entsprechend gekürzt werden können. Darauf wird der Zuganker, von der die Zugentlastung bildenden Kabelseele geführt, an die optischen Leiter geschoben, und die zurückgebogenen Streifen der Umhüllung auf die äussere Mantelfläche des Zugankers zurückgelegt. Nach einem in der DE-A1 3414611 beschriebenen Ausführungsbeispiel wird auf das Kabelende eine Schrumpfkappe mit Dichtkleber befestigt. Auf das so vorbereitete Kabelende wird schliesslich der Ziehstrumpf angebracht. Damit wurde die gemäss der Entgegenhaltung gestellte Aufgabe, die Zugkräfte auch auf das zentrale Zugentlastungselement zu übertragen und damit eine Beschädigung der optischen Leiter zu vermeiden, erreicht.

Diese bekannten Ziehstrümpfe weisen den Nachteil auf, dass sie verhältnismässig lang ausgebildet sein müssen. Weiter kann das aussenliegende Geflecht beim Ziehen an einem festliegenden Gegenstand einhängen. Bei empfindlichen Zugobjekten, z.B. Telefon- und Lichtleiterkabeln, wird ein feuchtigkeits- und gasdichter Verschluss verlangt. Die Einhaltung der Anforderungen ist im rauhen Betrieb einer Baustelle von nicht zu unterschätzender Bedeutung, insbesondere auch, weil die Zugobjekte oft durch Wasser und Schmutz gezogen werden müssen.

Die DE,U1, 8211359 beschreibt einen Ziehkopf für Koaxialkabel mit einer zweckentsprechend ausgebildeten Klemmvorrichtung, welche ausreichende Zugübertragungseigenschaften aufweist. Diese Klemmvorrichtung besteht im wesentlichen aus einem Spannstück, das mit seiner entsprechenden Bohrung auf den koaxialen Leiter gesteckt ist. Ueber das Spannstück mit mehreren radial verlaufenden Schlitzen wird ein Spannkonus geführt und festgeschraubt. An dieser Spannvorrichtung wird eine Zugöse befestigt. Um die zu übertragenden Zugkräfte beim Ein- oder Ausziehen des Kabels in erforderlicher Weise auf den koaxialen Leiter und den Aussenleiter zu verteilen, wird ein Ziehstrumpf mit einer Ziehstrumpfkopfscheibe an der Spannvorrichtung befestigt. Als Schmutz- und Feuchtigkeitsschutz wird mit einem Wickelband oder einem Schrumpfschlauch eine Schutzhülle geschaffen. Diese soll auch den Ziehstrumpf auf dem Aussenleiter fixieren. Dieses Gebrauchsmuster beschreibt eine kompliziert beschaffene Ziehvorrichtung, die mit grossem Aufwand aufgebracht werden muss.

Der Erfinder hat sich die Aufgabe gestellt, ein Verfahren und eine Vorrichtung der eingangs genannten Art zu schaffen, welche eine Zieheinrichtung betreffen, die den rauhen Baustellenbetrieb schadlos übersteht, das Zugobjekt vor chemischen und physikalischen Einwirkungen schützt und ohne Beeinträchtigung der Zugfestigkeit kürzer ausgebildet ist. Es soll eine einfachere und kostengünstigere Herstellung erreicht werden, ohne dass die vielseitige Einsetzbarkeit und Betriebssicherheit beeinträchtigt wird.

In bezug auf das Verfahren wird die Aufgabe erfindungsgemäss dadurch gelöst, dass ein Zugübermittler aus einem kraftschlüssig angreifenden Ziehstrumpf mit einem aussenliegenden, den Ziehstrumpf in Längsrichtung wenigstens teilweise bedeckenden, thermoplastischen Schrumpfschlauch in einem Arbeitsgang aufgebracht wird.

Durch das gleichzeitige Ueberstülpen des Ziehstrumpfs und des Schrumpfschlauchs, welcher z.B. mit einem Föhn oder mit einer Flamme eingeengt wird, wird gegenüber der DE,U1, 8211359 eine bedeutende Vereinfachung möglich, eine kompli zierte, mehrteilige Spannvorrichtung ist nicht notwendig. Die Qualität der Verbindung wird in keiner Weise beeinträchtigt.

Beim Aufbringen des Zugübermittlers kann der Ziehstrumpf lose im Schrumpfschlauch liegen. Vorzugsweise wird jedoch ein Zugübermittler mit wenigstens teilweise im inneren Bereich des Schrumpfschlauchs befestigten Ziehstrumpf aufgebracht, insbesondere mit einem eingeklebten. Zu diesem letzteren Zweck kann ein Zugübermittler aufgebracht werden, der einen mit einem Schmelzkleber innenbeschichteten Schrumpfschlauch aufweist. Dieser Kleber wird beim Schrumpfprozess flüssig, nimmt den Ziehstrumpf auf oder umfliesst diesen und verklebt mit der Aussenfläche des Zugobjekts. Bei abgestuften Kabeln bilden auch abgestuft freigelegte innere Schichten eine Aussenfläche.

Mechanisch erfüllt der Schrumpfschlauch die Aufgabe, nach der Querschnittsverengung den Ziehstrumpf so auf das Zugobjekt bzw. das Anhänge-Element zu drücken, dass er beim Ziehen den an sich bekannten Kraftschluss bildet. Mit Schrumpfschlauch wird hier und im übrigen auch eine Schrumpfkappe bezeichnet. Es brauchen nur wenige Normgrössen vorrätig zu sein, welche sich während des Schrumpfprozesses dem Zugobjekt anpassen. Der Enddurchmesser eines Schrumpfschlauchs liegt bevorzugt in einem Bereich von 25 -90% des Anfangsdurchmessers. So kann sich beispielsweise ein Schrumpfschlauch von 25 mm Durchmesser auf einen Enddurchmesser von etwa 10 mm zusammenziehen.

Vorzugsweise erfüllt der Schrumpfschlauch nicht nur eine mechanische, sondern auch eine chemische und/oder physikalische Schutzfunktion. In diesem Fall ragt der aufgeschrumpfte Schlauch an beiden Stirnseiten über den Ziehstrumpf hinaus und bildet einen feuchtigkeits- und gasdichten Verschluss. Weiter ist ein Anhängen des Ziehstrumpfs an einem Gegenstand ausgeschlossen.

In bezug auf die Ziehvorrichtung wird die Aufgabe erfindungsgemäss dadurch gelöst, dass diese nur wenig, vorzugsweise um den vier- bis siebenfachen Durchmesser des umhüllten Teils, über das stirnseitige Ende eines Zugobjekts und/oder eines Anhänge-Elements hinausragt.

Der auf diesen kurzen Distanzen gebildete Kraftschluss genügt, unter Meidung einer abrupten Verengung des Ziehstrumpfs, auch schwerste längsgeformte Zugobjekte in Rohre, Kanäle und dgl. zu ziehen. Ein zu starkes Einschnüren des Ziehstrumpfs wird vorzugseise dadurch verhindert, dass das Anhänge-Element über das Zugobjekt aufgeschoben (oder umgekehrt) oder eine Hülse eingelegt wird.

Das Material des Ziehstrumpfs wird entsprechend der Masse, der Abmessungen und der Verletzlichkeit des Zugobjekts gewählt. Geeignet sind Fasern aus einem Metall, insbesondere Stahl, Kunststoff, insbesondere Aramid (auch unter dem Markennamen KEVLAR bekannt) und Nylon, Kohlenstoff oder keramischen Materialien, wie Siliziumcarbid und Siliziumoxid.

Die nach dem erfindungsgemässen Verfahren hergestellte schlauch- oder kappenartige Ziehvorrichtung bzw. der Zugübermittler wird
- zum stirnseitigen Aufbringen auf ein Zugobjekt auf einer Seite und zur Bildung einer Zugöse aus Strumpffasern auf der andern Seite, oder
- zum Verbinden eines Anhänge-Elements mit einem Zugobjekt, oder
- zum Verbinden von zwei Zugobjekten oder zwei Anhänge-Elementen miteinander
verwendet.

Der kraftschlüssige Angriff der erfindungsgemässen Vorrichtung erfolgt zweckmässig an einer zylindrischen oder sich in Zugrichtung aufweitenden konischen Fläche, welche letztere eine Haftverbesserung erlaubt.

Weiter kann die Haftung des Ziehstrumpfs auf dem Zugobjekt, z.B. aus einem Metall, auch verbessert werden, indem zusätzlich ein Zwischenschrumpfschlauch, ein Klebeband oder ein Kleber aufgebracht wird.

Schliesslich kann eine verbesserte Haftung erzielt werden, indem das Ende des Ziehstrumpfs vorerst mit einen ersten kurzen Ziehstrumpf festgelegt, darauf straff angezogen und erst dann der eigentliche Schrumpfschlauch aufgeschrumpft wird.

Die Herstellung der Ziehvorrichtung erfolgt, wenn immer sinnvoll und möglich, in der Fabrik. Sie kann jedoch auch auf der Baustelle, vorzugsweise mit vorfabrizierten Zugübermittlern, erfolgen. Neben den genormten Einzelteilen müssen nur ein Brenner und einfache Werkzeuge zur Verfügung stehen. Nach dem Gebrauch wird die Ziehvorrichtung abgetrennt und ggf. der wenigstens teilweisen Wiederverwendung zugeführt.

Die Erfindung wird anhand der in der Zeichnung dargestellten Ausführungsbeispiele, welche auch Gegenstand von abhängigen Patentansprüchen sind, näher erläutert. Es zeigen schematisch:
   - Fig. 1 Anhänge-Elemente,
   - Fig. 2 vorfabrizierte Zugübermittler,
   - Fig. 3 eine aufgeschnittene Teilansicht eines über ein Rohr gestülpten vorfabrizierten Zugübermittlers,

- Fig. 4 einen ersten Zugübermittler vor und nach dem Aufbringen auf ein Zugobjekt,

- Fig. 5 einen zweiten Zugübermittler vor und während des Aufbringens auf ein Zugobjekt,

- Fig. 6 das Aufbringen eines Zugübermittlers auf ein Zugobjekt und ein Anhänge-Element, und

- Fig. 7 einen Längsschnitt durch eine Ziehvorrichtung mit stufenweise auf ein Zugobjekt einwirkender Zugkraft.

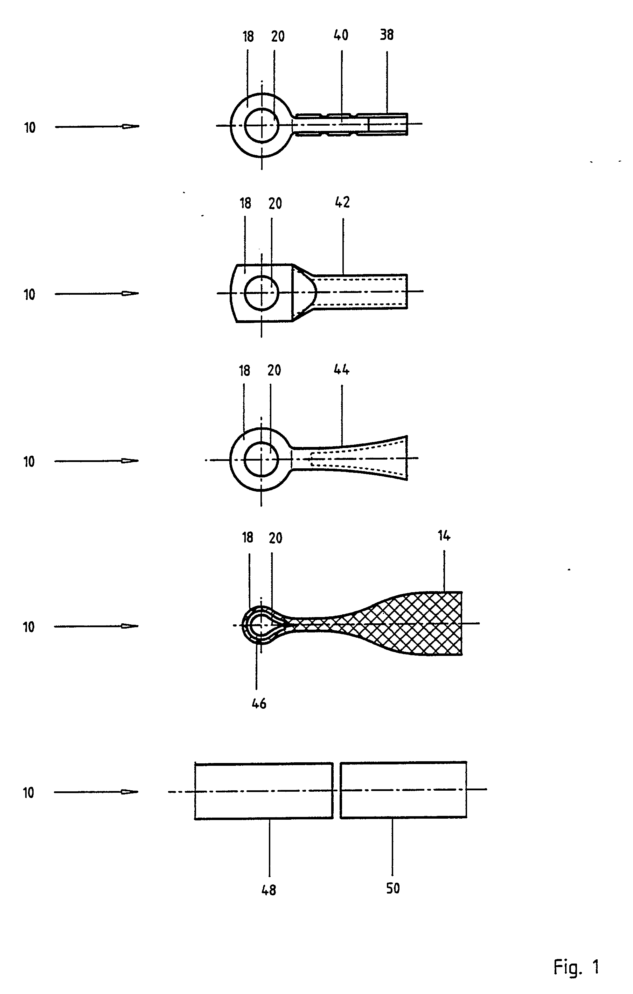

Die in Fig. 1 dargestellten Varianten von Anhänge-Elementen 10 für ein nicht dargestelltes Zugseil oder Kabel zeigen
- einen in eine Hülse 38 mit zylindrischem Hals eingepressten Dorn 40 mit einer eine Oeffnung 20 bildenden Zugöse 18,
- ein abgeflachtes Rohr 42 mit einem einer Zugöse 18 bildenden Oeffnung 20 und mit zylindrischem Hals,
- ein konisches Rohr 44 mit einer Zugöse 18, mit einem sich in von der Zugöse 18 wegweisender Richtung öffnenden Hals,
- ein Ende eines Ziehstrumpfs 14 mit einer aus Strumpffasern gebildeten Zugöse 18, mit einem Faserschutz 46, und
- ein Ende eines an ein zylindrisches Zwischenstück 50 angekoppelten Kabels 48.

Die Anhänge-Elemente dienen der kraftschlüssigen Anlage eines Ziehstrumpfs 14, falls dieser nicht schon Bestandteil eines Anhänge-Elements 10 ist.

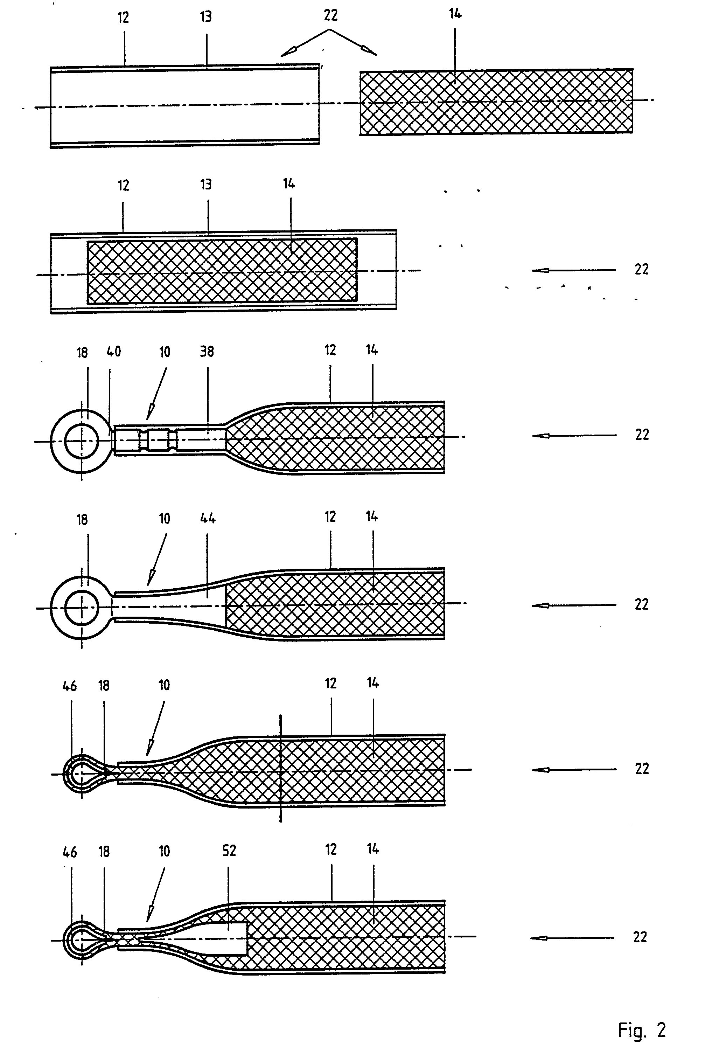

Die in Fig. 2 dargestellten vorfabrizierten Zugübermittler 22, teilweise mit eingeführten Anhänge-Elementen 10, umfassen im wesentlichen einen aussenliegenden Schrumpfschlauch 12 und einen innenliegenden Ziehstrumpf 14. Die Varianten der vorfabrizierten Zugübermittler 22 zeigen
- einen Schrumpfschlauch 12 mit innerer Klebeschicht 13 und einen separaten Ziehstrumpf 14 als offenes System, wobei zuerst der Ziehstrumpf 14 aufgezogen, dann der Schrumpfschlauch 12 darübergestülpt wird,
- einen Schrumpfschlauch 12 mit innerer Klebeschicht 13 und eingeführtem Ziehstrumpf 14,
- einen auf ein Anhänge-Element 10, bestehend aus einem in eine zylindrische Hülse 38 gepressten Dorn 40 mit einer Zugöse 18, geschrumpften Schlauch 12 mit innenliegendem Ziehstrumpf 14,
- einen auf ein Anhänge-Element 10, bestehend aus einem sich aufweitenden Rohr 44 mit einer Zugöse 18, geschrumpften Schlauch 12 mit innenliegendem Ziehstrumpf 14,
- ein Ende eines Ziehstrumpfs 14 mit aussenliegendem Schrumpfschlauch 12 und einer aus Strumpffasern gebildeten, einen Faserschutz 46 aufweisenden Zugöse 18, und
- ein Ende eines Ziehstrumpfs 14 mit aussenliegendem Schrumpfschlauch 12, einer aus Strumpffasern gebildeten, einen Faserschutz 46 aufweisenden Zugöse 18 und einer Einlage 52 im Bereich des geschrumpften Schlauchs 12.

Die gemäss Fig. 2 als offenes System ausgebildeten Zugübermittler 22 können, je nach dem Fasermaterial des Ziehstrumpfs 14, mit einer Spezialschere zu Stücken beliebiger Länge abgeschnitten werden, auch auf der Baustelle.

Das thermoplastische Material des an sich bekannten Schrumpfschlauchs 12, beispielsweise aus modifizierten Polyolefinen, ist auch nach dem Schrumpfen, beispielsweise von 25 auf 10 mm Durchmesser noch elastisch. Beim Einwirken einer Zugkraft in Längsrichtung L bildet der innenliegende Ziehstrumpf 14 mit dem Zugobjekt einen Kraftschluss. Für Details betreffend Schrumpfschläuche 12 wird auf die Firmenschrift "Wärmeschrumpfendes Kabelzubehör, CH 4.88-VH" der Raychem AG, CH-6340 Baar, verwiesen.

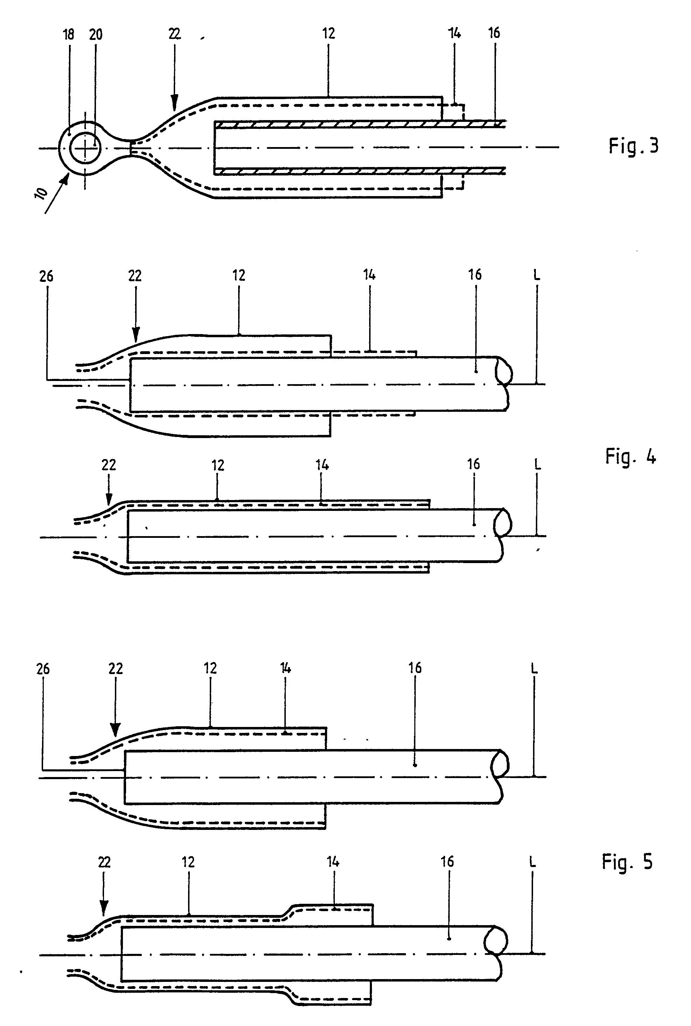

In der Ausführungsform nach Fig. 3 ist ein kappenartig ausgebildeter Zugübermittler 22 mit einem aussenliegenden Schrumpfschlauch 12 und einem innenliegenden Ziehstrumpf 14 über ein aufgeschnitten dargestelltes Wasserrohr, welches das Zugobjekt 16 bildet, gestülpt. Beim Aufschrumpfen ver längert sich der Schrumpfschlauch 12 und gibt diesem genügend Halt, damit bei Einwirken einer Zugkraft der Kraftschluss gebildet werden kann.

Den Abschluss des kappenartigen Zugübermittlers 22 bildet eine aus Strumpffasern endlos ausgestaltete Zugöse 18, an welcher ein nicht dargestelltes Zugseil angreift. Ein ähnlicher Zubübermittler ist durch Durchschlingen eines Ziehstrumpfs, vorzugsweise etwa in der Mitte, herstellbar. Dabei entsteht ein nicht dargestellter Doppelstrumpf.

Das Anhänge-Element 10 gemäss Fig. 3 kann modifiziert werden, indem ein aussen offener Metall- oder Kunststoffring, eine Kausche, als Faserschutz 46 (Fig. 1, 2) in die Oeffnung 20 der Zugöse 18 eingelegt wird. Die Kausche kann rund oder tropfenförmig ausgebildet sein.

In Fig. 4 wird gezeigt, wie ein kappenartiger erster Zugübermittler 22 auf den Bereich der Stirnseite 26 eines Zugobjekts 16 aufgebracht wird. Vorerst wird der Ziehstrumpf 14 auf die Oberfläche des Zugobjekts gezogen und liegt satt auf. Darauf wird der Schrumpfschlauch 12 über das stirnseitige Ende 26 des Zugobjekts 16 gestülpt und aufgeschrumpft. Der untere Teil von Fig. 5 zeigt den Zugübermittler 22 mit aufgeschrumpftem Schlauch 12 und darunterliegendem Ziehstrumpf 14. Beim Schrumpfen hat sich der Schrumpfschlauch 12 in Richtung L stark verlängert, der Ziehstrumpf ist nun vollständig zugedeckt. Dies ist vor allem bei feuchtigkeits- und/oder gasempfindlichen Zugobjekten notwendig.

Fig. 5 zeigt einen zweiten Zugübermittler 22, welcher einen Schrumpfschlauch 12 und einen auf die Innenfläche des Schrumpfschlauchs geklebten oder gesiegelten Ziehstrumpf 14 hat. Die obere Hälfte der Figur zeigt das eine, über das Zugobjekt 16 hinausragende Ende des Zugübermittlers 22. Die untere Hälfte der Figur deutet den Aufschrumpfprozess des Zugübermittlers 22 auf das Zugobjekt 16 an. Der thermoplastische Kunststoff des Schrumpfschlauchs 12 ist so weich und elastisch, dass die Funktion des Zugstrumpfs 14 nicht beeinträchtigt wird.

Mit einer Zugvorrichtung, welche einen Zugübermittler 22 gemäss Fig. 4 oder 5 und ein Anhänge-Element 10 gemäss Fig. 1 umfasst, können Verbindungen zu Zugobjekten 16 auch hohe Zuglasten schadlos überstehen.

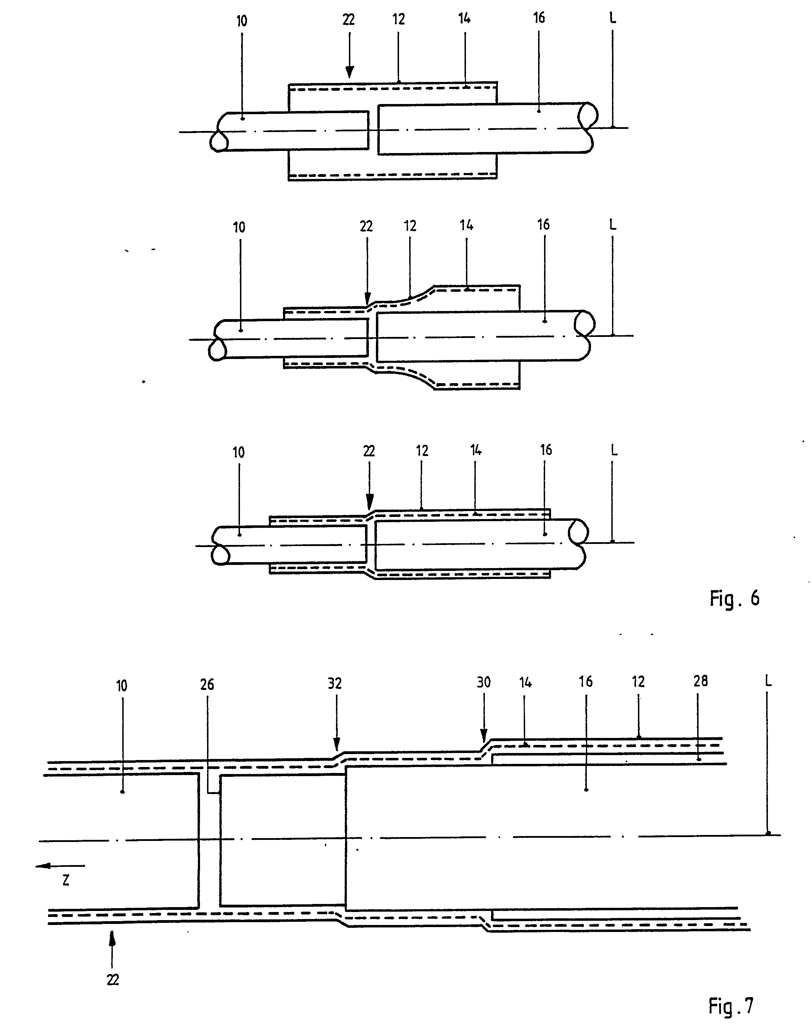

Fig. 6 zeigt das Verbinden eines Anhänge-Elements 10 (Fig. 1, unten) mit einem Zugobjekt 16, beispielsweise einem Kabel . Das Anhänge-Element 10 und das Zugobjekt 16 werden in den Zugübermittler 22 gesteckt. Der Schrumpfschlauch 12 mit innenliegendem Ziehstrumpf 14 wird beispielsweise mit einem Föhn oder einem Brenner auf das Anhänge-Element 10 und das Zugobjekt 16 geschrumpft. Nach dem Aufschrumpfen des Zugübermittlers 22 entsteht eine kraftschlüssige Verbindung zwischen Anhänge-Element 10 und Zugobjekt 16, welche stark und dauerhaft ist.

Entsprechend Fig. 6 können auch zwei Zugobjekte 16 oder zwei Anhänge-Elemente 10, z.B. zu Prüfzwecken, miteinander verbunden werden.

Fig. 7 zeigt einen Zugübermittler 22 aus einem äusseren Schrumpfschlauch 12 und einem inneren Ziehstrumpf 14, welcher auf ein das Zugobjekt 16 bildendes Telefonkabel aufgebracht ist. Damit nicht die ganze, vom Anhänge-Element 10 ausgeübte Zugkraft Z auf den Kabelmantel 28 übertragen wird, ist dieser in Richtung des stirnseitigen Endes 26 abgetragen. Dadurch wird eine erste umlaufende Stufe 30 gebildet. In diesem Bereich greift der Ziehstrumpf 14 an der äussersten Schicht von Adern an.

Weiter ist auch wenigstens eine Kabel-Aufbauschicht abgestuft freigelegt, wodurch wenigstens eine weitere Stufe 32 gebildet wird. Auf so freigelegten Schichten wird auch der entsprechende Teil der Gesamtzugkraft Z übertragen und eine allfällige Ueberlastung des Kabelmantels 28 vermieden.

Auch nicht freigelegte, innere Schichten des Kabelaufbaus können zur teilweisen Aufnahme der Zugkraft Z mitbenutzt werden, wenn zusätzliche Klebemasse, z.B. ein Heisschmelzkleber, aufgetragen oder aufbandagiert wird. Beim Erwärmen fliesst der Kleber ins Kabelinnere und überträgt nach dem Aushärten eine angelegte Zugkraft Z.

**Ansprüche**

1. Verfahren zur Herstellung einer schlauch- bzw. kappenartigen Vorrichtung zum Ziehen von längsgeformten, im Querschnitt runden oder abgerundeten Zugobjekten (16), insbesondere von Kabeln oder Rohren, in deren Längsrichtung (L), dadurch gekennzeichnet, dass
ein Zugübermittler (22) aus einem kraftschlüssig angreifenden Ziehstrumpf (14) mit einem aussenliegenden, den Ziehstrumpf (14) in Längsrichtung (L) wenigstens teilweise bedeckenden, thermoplastischen Schrumpfschlauch (12) in einem Arbeitsgang aufgebracht wird.

2. Verfahren nach Anspruch 1, dadurch gekennzeichnet, dass ein Zugübermittler (22) mit wenigstens teilweise im inneren Bereich des Schrumpfschlauchs (12) eingebettetem Ziehstrumpf (14) aufgebracht wird.

3. Verfahren nach Anspruch 1, dadurch gekennzeichnet, dass ein Zugübermittler (22) mit innerhalb des Schrumpfschlauchs (12) verklebtem Ziehstrumpf (14) aufgebracht wird.

4. Verfahren nach einem der Ansprüche 1 - 3, dadurch gekennzeichnet, dass ein Zugübermittler (22), welcher einen Schrumpfschlauch (12) mit einem innenbeschichteten Schmelzkleber (13) aufweist, aufgebracht wird.

5. Vorrichtung, hergestellt nach dem Verfahren von einem der Ansprüche 1 - 4, dadurch gekennzeichnet, dass sie nur wenig, vorzugsweise um den vier- bis siebenfachen Durchmesser des umhüllten Teils, über das stirnseitige Ende (26) eines Zugobjekts (16) und/oder eines AnhängeElements (10) hinausragt.

6. Vorrichtung nach Anspruch 5, dadurch gekennzeichnet, dass sie ihre Zugkraft (Z) an der äusseren Mantelfläche und/oder an wenigstens einer abgestuften Oberfläche eines Zugobjekts (16), insbesondere am Kabelmantel (28) und/oder an inneren Kabelaufbauschicht/en (34, 36), ausübt.

7. Vorrichtung nach Anspruch 5 oder 6, dadurch gekennzeichnet, dass die Fasern des Ziehstrumpfs (14) aus Metall, Kunststoff, Kohlenstoff oder einem keramischen Material bestehen.

8. Verwendung der nach einem der Ansprüche 1 - 4 hergestellten Ziehvorrichtung
- zum stirnseitigen Aufbringen auf ein Zugobjekt (16) auf einer Seite und zur Bildung einer Zugöse (18) aus Strumpffasern auf der andern Seite, oder
- zum Verbinden eines Anhänge-Elements (10) mit einem Zugobjekt (16), oder
- zum Verbinden von zwei Zugobjekten (16) oder zwei Anhänge-Elementen (10) miteinander.

9. Verwendung der Vorrichtung nach Anspruch 8 zum kraftschlüssigen Angriff an einer zylindrischen oder sich in Zugrichtung (L) aufweitenden konischen Fläche.

Fig. 1

Fig. 2

Fig. 3

Fig. 4

Fig. 5

Fig. 6

Fig. 7

Europäisches
Patentamt

**EUROPÄISCHER RECHERCHENBERICHT**

Nummer der Anmeldung

EP    90 81 0301

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-1540034 (LICENTIA)<br>* Anspruch 1; Figur 1 *<br>--- | 1, 8, 9 | H02G1/08 |
| Y | FR-A-2551927 (DUBOIS)<br>* Zusammenfassung; Figur 1 * | 1, 8, 9 | |
| A | --- | 5-7 | |
| A,D | DE-U-8211359 (P. LANCIER)<br>* Seite 3; Figur 1 *<br>--- | 1, 6-9 | |
| A,D | DE-A-3414611 (AEG)<br>* Seite 5, Absatz 1,2; Figur 1 *<br>--- | 1, 3, 4, 7 | |
| A | DE-U-8709907 (KUMPF)<br>* Ansprüche 1-4; Figuren 1, 2 *<br>--- | 1, 5-9 | |
| A | DE-A-2429112 (SIEMENS)<br>* Seite 5, Zeilen 12 - 17 *<br>* Seite 8; Figur 1 *<br>--- | 1, 5, 6, 8, 9 | |
| A | DE-A-2841143 (RAYCHEM)<br>* Seite 28, Absatz 1 *<br>------ | 1, 2, 8, 9 | RECHERCHIERTE SACHGEBIETE (Int. Cl.5)<br><br>H02G<br>G02B<br>H01R |

Der vorliegende Recherchenbericht wurde für alle Patentansprüche erstellt

| Recherchenort | Abschlußdatum der Recherche | Prüfer |
|---|---|---|
| DEN HAAG | 13 JULI 1990 | LOMMEL A. |